Europäisches Patentamt

European Patent Office

Office européen des brevets

(11) Veröffentlichungsnummer: **0 420 145 A2**

(12) **EUROPÄISCHE PATENTANMELDUNG**

(21) Anmeldenummer: 90118386.3

(51) Int. Cl.5: **G01N 21/31**

(22) Anmeldetag: 25.09.90

(30) Priorität: 28.09.89 DE 3932421

(43) Veröffentlichungstag der Anmeldung:
03.04.91 Patentblatt 91/14

(84) Benannte Vertragsstaaten:
**GB**

(71) Anmelder: **CAMMANN, Karl,Prof. Dr.**
**Anorg.Chem. Institut, Abt. Anal.Chemie Prof.**
**Cammann, Westf.Wilhelms Universität,**
**Wilhelm Klemm Strasse 8**
**W-4400 Münster(DE)**

(72) Erfinder: **Winter, Frank G., Dipl.-Chem.,**
**Lehrstuhl für**
**Analytische Chemie, Universität Münster**
**Wilhelm Klemm Strasse 8, W-4400**
**Münster(DE)**
Erfinder: **Quick, Ludger, Dipl.-Chem.,**
**Lehrstuhl für**
**Analytische Chemie, Universität Münster**
**Wilhelm Klemm Strasse 8, W-4400**
**Münster(DE)**
Erfinder: **Rump, Thomas, Dipl.-Chem.,**
**Lehrstuhl für**
**Analytische Chemie, Universität Münster**
**Wilhelm Klemm Strasse 8, W-4400**
**Münster(DE)**
Erfinder: **Cammann, Karl, Prof. Dr. Dipl.-Ing.,**
**Lehrstuhl für**
**Analytische Chemie, Universität Münster**
**Wilhelm Klemm Strasse 8, W-4400**
**Münster(DE)**

(74) Vertreter: **Rücker, Wolfgang, Dipl.-Chem.**
**Alte Dorfstrasse 16**
**W-3160 Lehrte OT Arpke(DE)**

(54) **Verfahren und Vorrichtung zur Messung von Atomspektren zur Bestimmung der Menge eines gesuchten Elementes.**

(57) Beschrieben wird ein Verfahren und eine Vorrichtung zur gleichzeitigen Bestimmung mehrerer Elemente durch Nutzung der elementspezifischen Strahlung einer Strahlungsquelle, wobei die Strahlungsquellen mit unterschiedlicher Frequenz gepulst sind und die ausgesendete Strahlung durch eine optische Anordnung von Linsen und Lichtleitern nach Durchlaufen einer Atomisierungsvorrichtung in Interferenzfiltern separiert und über einen Lichtdetektor ausgewertet wird, so daß durch die unterschiedlichen Frequenzen die Signale der einzelnen Lampen und damit der einzelnen Elementseparationen erfaßt werden. In einer weiteren Ausgestaltung können alle Hohlkathodenlampen mit ein und derselben Frequenz gepulst werden und die Elementseparation erfolgt über den Parameter "Zeit".

Die Erfindung betrifft eine Vorrichtung und ein Verfahren zur Messung von Atomspektren zur Bestimmung der Menge eines gesuchten Elementes, dessen Atome in dem jeweiligen spezifischen Spektralbereich absorbieren.

Es ist bekannt, daß Atome in bestimmten schmalen Bandbereichen (Spektrallinien) elektromagnetische Strahlung sowohl emittieren als auch absorbieren. Hierbei erfolgt eine Absorption der entsprechenden Strahlung mit der jeweiligen Wellenlänge, welche das betreffende Atom selbst aussendet. Diese Eigenschaft wird genutzt, um die Menge bzw. Konzentration eines gesuchten Elementes zu bestimmen, wobei das zu untersuchende Element vorher in irgendeiner Form atomisiert wird. Als elementspezifische Strahlungsquelle werden hauptsächlich Hohlkathodenstrahler (HKL) oder elektrodenlose Glimmentladungslampen (EDL) eingesetzt.

Die Atomisierung erfolgt üblicherweise in einer Flamme bzw. in einem elektrisch beheizten Graphitrohr. In Einzelfällen können auch beheizbare Quarzküvetten eingesetzt werden. Nach Durchstrahlen der Atomisierungseinheit und erfolgter Absorption wird das Licht üblicherweise auf einen Monochromator fokussiert, um das eigentliche Meßlicht von eventuell vorhandenem Streulicht der Atomisierungseinheit und von zusätzlich zur Resonanzlinie ausgesandten Emissionslinien der Strahlungsquelle zu trennen. Dieses Licht sowie die ungeschwächt eingestrahlte Lichtmenge werden in Beziehung zueinander gesetzt und ergeben, nach geeigneter meßtechnischer Aufbereitung, den eigentlichen Meßwert, welcher sich einer Menge oder Konzentration des zu untersuchenden Elementes zuordnen läßt.

Diese Art der Wellenlängenseparation wird ebenfalls dort eingesetzt, wo mehrere Elemente unter Nutzung der spezifischen Hohlkathodenlampen (HKL) untersucht werden sollen. Bisher benötigt ein Meßgerät, mit dem mehrere Elemente gleichzeitig (simultan) gemessen werden sollen, die entsprechende Anzahl von Monochromatoren mit gleicher Anzahl von Gittern, Photomultipliern (PMT) und Verstärkern sowie zahlreicher empfindlicher optischer Bauteile oder Polychromatoren mit mehreren PMTs auf einem Rowlandkreis. Eine weitere Möglichkeit der gleichzeitigen Bestimmung mehrerer Elemente ist die Nutzung einer kontinuierlichen Strahlungsquelle, welches das absorbierbare Licht enthält. Diese Ausführung benötigt zur Wellenlängen- und damit Elementseparation einen komplizierten, optischen Aufbau sowie einen Polychromator sehr hoher Auflösung mit der den Elementen entsprechenden Anzahl von Verstärkern und PMTs.

Aufgabe der vorliegenden Erfindung ist es nun, eine Vorrichtung der eingangs beschriebenen Art vorzuschlagen, mit der es in vereinfachter Form und mit wenig Aufwand möglich ist, beliebig viele Elemente simultan zu messen und die Mengen oder Konzentrationen zu bestimmen.

Die erfindungsgemäße Vorrichtung und das erfindungsgemäße Verfahren sind in den beigefügten Ansprüchen gekennzeichnet.

Um eine möglichst schnelle, unaufwendige und kostengünstige Bestimmung mehrerer Elemente gleichzeitig zu erreichen, arbeitet das erfindungsgemäße Verfahren mit einer Elementseparation, welche hauptsächlich auf elektronischer und nicht auf optischer Basis abläuft. Die Strahlungsquellen der verschiedenen Elemente werden mit geeigneten unterschiedlichen Frequenzen gepulst. Die ausgesandte Strahlung wird durch eine optische Anordnung, vorzugsweise Linsen, in einem mehrarmigen Lichtleiterkabel, vorzugsweise Quarzglas, eingekoppelt. Auf diese Weise wird die Strahlung einer beliebigen Anzahl von Hohlkathodenlampen vereinigt, wobei die einzelnen elementspezifischen Strahlungen das Meßsystem mit unterschiedlichen elektronischen Freqenzen durchlaufen. Die optischen Linsen bestehen vorzugsweise aus Quarz und leiten die Strahlen parallel oder fokussiert durch eine geeignete Atomisierungseinrichtung.

Das nach erfolgter Absorption geschwächte Licht, wird anschließend in ein weiteres, mehrarmiges Lichtleiterkabel eingekoppelt, wobei sich die Anzahl der simultan meßbaren Elemente ausschließlich nach der Anzahl der verfügbaren Arme des mehrarmigen Lichtleiterkabels richtet.

Zur Separation der elementspezifischen Resonanzwellenlängen werden von anderen Emulsionen der Strahlungsquellen und der Atomisierungseinheit Interferenzfilter eingesetzt, die den jeweiligen Lichtleiterarmen nachgeschaltet sind. Nach dem Durchlaufen dieser Filter wird die resultierende Strahlung durch Einkopplung in einen weiteren Lichtleiter wieder vereinigt und einem Lichtdetektor, vorzugsweise Photomultiplier oder Photodiode, zugeführt.

Durch den Einsatz unterschiedlicher Frequenzen ist es somit möglich die Signale der einzelnen Hohlkathodenlampen und somit der entsprechenden Elemente mit nur einem Lichtdetektor getrennt zu erfassen, indem Lock-In-Verstärker mit geeigneten Referenzfrequenzen eingesetzt werden. Jeder beliebigen Frequenz und damit auch jeder Hohlkathodenlampe und somit jedem Element ist ein mit der entsprechenden Freqezn versehener Lock-In-Verstärker zugeordnet, wodurch eine Unterscheidung der einzelnen Lampensignale bei der Detektion durch einen Detektor ermöglicht wird.

Bei der erfindungsgemäßen Ausgestaltung handelt es sich somit quasi um ein elektronisches frequenzauflösendes Messen und nicht wie in den bekannten Fällen um eine optische Separation der Wellenlängen der einzelnen Elemente.

Durch die erfindungsgemäße Ausgestaltung wird der Einsatz schwer justierbarer Optik, leistungsschwacher Kontinuumstrahler sowie mehrerer Photomultiplier oder ungenügend auflösender Diodenarrays unnötig. Die vorgestellte Erfindung macht es möglich, beliebig viele Elemente simultan mit einfachen Mitteln zu vermessen.

Die erfindungsgemäßen Vorrichtungen zur Durchführung des Verfahrens werden nun anhand von Ausführungsbeispielen beschrieben.

Fig. 1 zeigt eine Ausgestaltungsform in der Art eines Fließbildes;

Fig. 2 zeigt eine abgewandelte Ausgestaltungsform und

Fig. 3 zeigt die zeitliche Abfolge der Meßdatenaufnahme der in Fig.2 beschriebenen Ausgestaltungsform in schematischer Form.

Von mehreren Hohlkathodenlampen (HKLs) 1 werden elementspezifische Strahlungen erzeugt. Diese werden von jeweils einer Stromversorgung 10 betrieben und mit je einem Frequenzgenerator 9 verbunden die unterschiedliche Frequenzen erzeugen und die HKLs entsprechend pulsen. Das ausgesandte Licht wird mittels optischer Linsen 2 in einen mehrarmigen Lichtleiter 3 eingekoppelt. Die auf diese Weise vereinigte Strahlung mehrerer Strahlungsquellen wird anschließend wahlweise parallel oder fokussiert durch die Atomisierungszone, im vorliegenden Falle durch einen Brenner 4, geleitet und danach durch eine weitere Linse 2 in einen mehrarmigen Lichtleiter eingekoppelt und so auf die einzelnen Arme verteilt. Hinter jedem Arm des Lichtleiters sind Interferenzfilter 5 eingesetzt, die die jeweiligen Resonanzlinien der einzelnen Elemente aussondern und von eventuellen Streustrahlungen der Atomisierungseinheit sowie zusätzlich emittierter Wellenlängen der HKLs abtrennen.

Es folgt die anschließende Einkopplung in einen weiteren mehrarmigen Lichtleiter, der das resultierende Meßlicht vereinigt und zwecks Detektion einem Photomultiplier 6 zuführt. Die frequenzverschiedenen Signale werden von Lock-In-Verstärkern 8 in der Form abgegriffen, daß jeder eingesetzte Lock-In-Verstärker 8 nur das Signal bearbeitet, welches seiner eigenen Referenzfrequenz entspricht. Diese Referenzfrequenz wird durch die Frequenzgeneratoren 9 der einzelnen Lock-In-Verstärkern aufgegeben. Anschließend werden die so erhaltenen Meßwerte einer Ausgabeeinheit (11), zugeführt.

Der Interferenzfilter 5 kann ein feststehender Interferenzverlaufsfilter mit geeignet geformten Lichtleitern sein, oder ein rotierender, runder Interferenzfilter oder jede Art einer äquivalenten derartigen Einrichtung. Ebenso können Photodioden zur Signalerfassung und Vorrichtungen zur Untergrundkompensation vorgesehen sein.

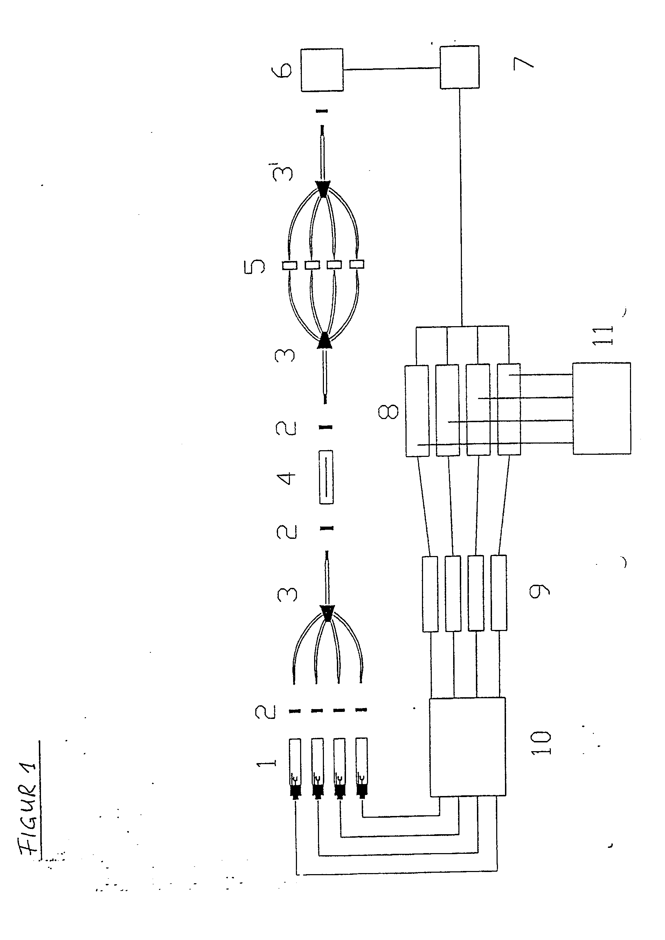

In einer weiteren Ausgestaltung der Erfindung wird ein Frequenzgenerator 15 und eine zentrale Steuerung 16 eingesetzt, die an die Stelle des Funktionsgenerators 9 nach Fig. 1 treten. Durch diese Kombination können die Lock-In-Verstärker 8 durch einfachere Sample and Hold Verstärker ersetzt werden. Die zentrale Steuerung 16 regelt mehrere Stromversorgungen, welche die eingesetzten Lampen betreiben, sowie die eingesetzten Sample und Hold-Schaltungen 8'. Hierbei werden die einzelnen Lampen und somit die einzelnen Resonanzlinien zeitlich versetzt in das Meßsystem eingebracht und zu unterschiedlichen Zeiten abgefragt. Auf diesem Wege ist wiederum eine Elementseparation über den Parameter "Zeit" möglich.

Ein stabiler Frequenzgenerator gibt eine frei wählbare Frequenz zu einer zentralen Steuereinheit aus. Diese Steuereinheit erledigt mehrere Aufgaben.

Erstens gibt sie zu definierten Zeitpunkten Pulssignale an die Stromversorgungen der einzelnen Hohlkathodenlampen, um diese in einer bestimmten Reihenfolge ein- bzw. auszuschalten. Zweitens steuert sie die Sample and Hold-Schaltungen 8' an, damit sie zu bestimmten Zeitpunkten die Meßwerte der einzelnen Kanäle abtasten, während der gesamten Periodendauer speichern und an die entsprechenden Ausgabeeinheiten 12 weiterleiten. Eliminiert werden muß die Eigenemission der Atomisierungseinheit. Die Kompensation dieser Emission erfolgt durch eine Differenzmessung des Signals bei eingeschalteter HKL mit dem Signal bei ausgeschalteter HKL. Die an den Ausgabeeinheiten erhaltenen Signale der einzelnen Kanäle können einem Element zugeordnet werden und dienen zur Ermittlung der Konzentration bzw. der Menge dieses Elementes.

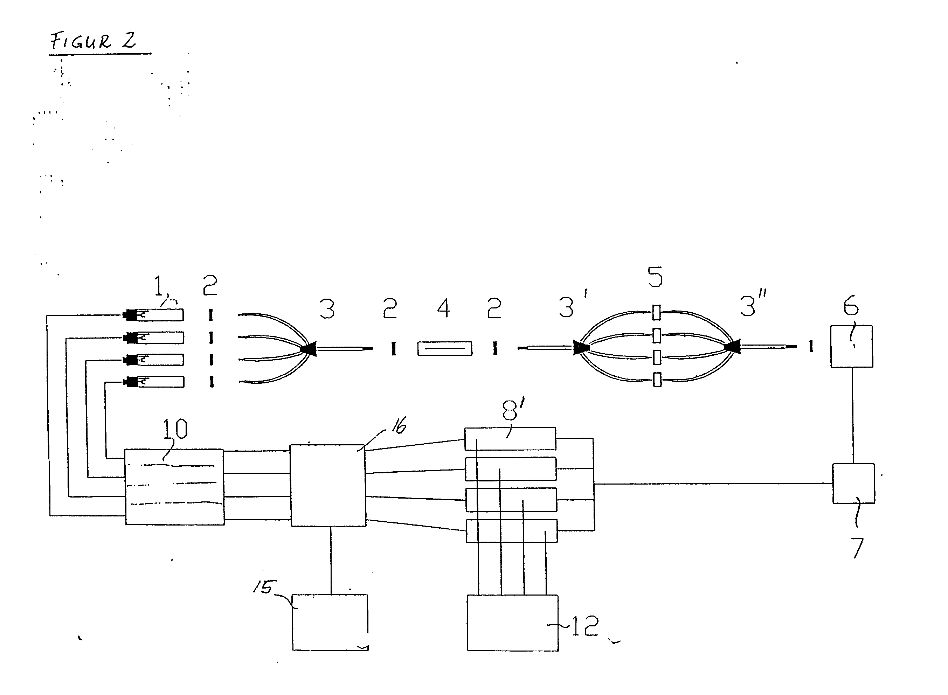

Fig. 2 zeigt eine Meßanordnung, wie sie für atomspektrometrische Messungen dieser Art, simultan und multielement-fähig, sinnvoll ist.

Ein Funktionsgenerator 15 triggert eine zentrale Steuereinheit 16 mit einer frei wählbaren Frequenz. Diese Steuereinheit regelt die Stromversorgung 10 der einzelnen Lampen 1. Das Licht der jeweils vermessenen Lampe 1 wird über eine geeignete optische Anordnung 2 in ein mehrarmiges Lichtleiterkabel 3 eingekoppelt. Aus der Lichtleiterfaser heraus wird das emittierte Licht durch die Atomisierungseinheit 4 geleitet und anschließend wieder in einen mehr armigen Lichtleiter 3 eingekoppelt. Der Lichtleiter teilt das Licht wieder in einzelne Lichtleiterarme auf, wobei vor jedem Lichtleiterarm ein den Elementen entsprechender Interferenzfilter 5 eingesetzt ist. Nach Durchlaufen dieses Interferenzfilters wird das Licht in einem weiteren mehrarmigen Lichtleiter 3" wieder vereinigt und einem Detektor 6 zugeführt, in welchem das Licht Signale erzeugt. Die Signale des Detektors werden durch einen Meßverstärker 7 verstärkt und an die Sample and Hold-Schaltung 8' geleitet. Durch die Steuereinheit 16 werden die Sample and Holdschaltungen zu definierten Zeiten geöffnet (Meßfenster) und können so den jeweils eingeschalteten HKLs zugeordnet werden. Die Bezugszeichen 11 und 12 bezeichnen eine Vorrichtung zur Auswertung oder Aufzeichnung der Meßsignale. In der zweiten Ausgestaltung nach Fig. 2 werden die Meßsignale zeitlich nacheinander mit hoher Frequenz gemessen und nicht wie in der Ausgestaltung nach Fig. 1 durch unterschiedliche Frequenzen.

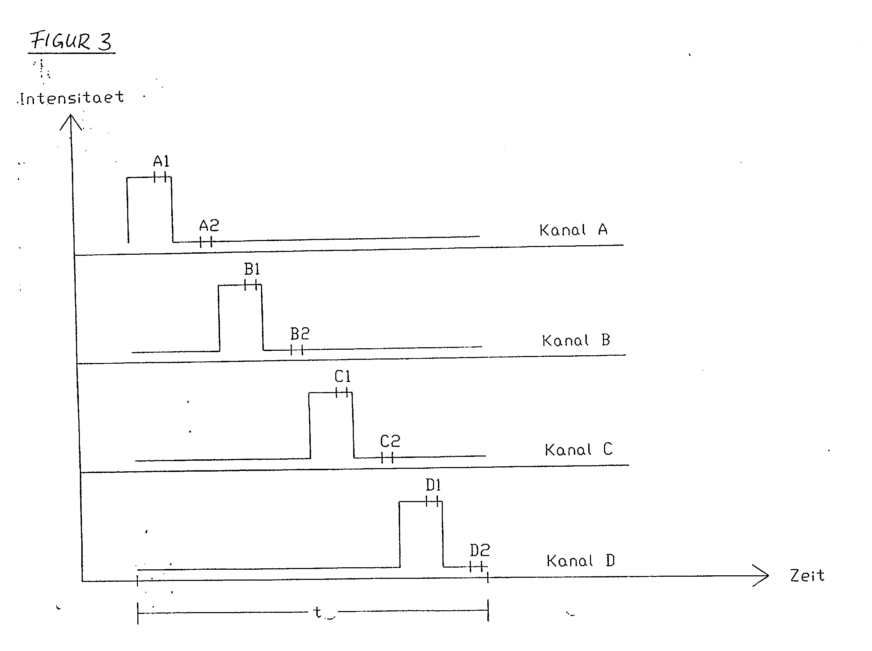

Fig. 3 gibt die zeitliche Abfolge der Meßdatenaufnahe schematisch gemäß Fig. 2 an. Während einer Schwingungsperiode des Frequenzgenerators mit der Periodendauer t werden alle Lampen zu einem definierten Zeitpunkt ein- bzw. ausgeschaltet. In dem dargestellten Beispiel handelt es sich um eine Anordnung von vier Lampen die nacheinander angeschaltet werden. Es werden pro Kanal zwei Meßfenster A1...D2 gesetzt, deren Differenz als Meßwert ausgegeben wird. Diese Differenz stellt also die Gesamtintensität der Lampe dar, die durch die Absorption geschwächt wird.

## Ansprüche

1. Verfahren zur Messung von Atomspektren zur Bestimmung der Menge mehrerer chemischer Elemente, deren Atome in einem spezifischen Spektralbereich absorbieren, wobei, die zu untersuchenden Elemente zuvor atomisiert und das Atomisat von einer spezifischen Strahlung durchstrahlt wird. Hierbei erfolgt eine Absorption, woraufhin das verbleibende Meßlicht zur eingestrahlten Lichtmenge in Beziehung gesetzt und meßtechnisch ausgewertet wird, **dadurch gekennzeichnet,** daß zur gleichzeitigen Bestimmung von wenigstens zwei chemischen Elementen, deren elementspezifische Strahlungen jeweils mit einer bestimmten Gleichstrombetriebsfrequezn versorgt werden und ein Linienspektrum emittieren, welches optisch durch einen Atomisierungsbereich geleitet, anschließend vermittels Interferenzfilter spektral separiert und die einzelnen Spektrenteile gemessen werden.

2. Verfahren nach Anspruch 1, **dadurch gekennzeichnet,** daß die elementspezifischen Strahlungen durch die gepulsten Gleichstrombetriebsfrequenzen separiert werden.

3. Verfahren nach Anspruch 1, **dadurch gekennzeichnet,** daß jede elementspezifische Strahlung mit ein und derselben Gleichstrombetriebsfrequenz versorgt wird und die Separierung der einzelnen spezifischen Strahlungen über die Zeit vorgenommen wird.

4. Vorrichtung zur Durchführung des Verfahrens nach Anspruch 1 bis 3 unter Verwendung von Strahlungsquellen zur Erzeugung eines Meßlichtbündels, einer Atomisierungsvorrichtung mit Einrichtungen zur Zuführung der zu untersuchenden Elementproben, sowie einem Photodetektor (Multiplier oder Diode) dem das Meßlicht zugeführt wird, **dadurch gekennzeichnet,** daß für jeden Kanal frequenzverschiedene Signale eines Frequenzgenerators (9) einer elementspezifischen Strahlung emittierenden Vorrichtungen (1) zugeführt werden, das emittierende Licht über optische Linsen (2) und mehrarmige Lichtleiter (3) durch die Atomisierungszone (4) hindurchleiten, anschließend über weitere Linsen (2), einem weiteren mehrarmigen Lichtleiter (3') zuführen und auf einzelne Lichtleiterarme verteilt werden, die jeweils Interferenzfilter (5) enthalten, welche die Resonanzlinien der einzelnen Elemente aussondern und sie über weitere mehrarmige Lichtleiter zur meßtechnischen Auswertung einem Photodetektor (Multiplier oder Diode (6) und den Lock-In-Verstärkern (8) zuführen, die gleichzeitig die Referenzfrequenz ihres Kanals vom Frequenzgenerator (9) erhalten und so Signale ihrer elektronischen Referenzfrequenz herausfiltern.

5. Vorrichtung nach Anspruch 4, **dadurch gekennzeichnet,** daß die Stromversorgungen (10) der elementspezifischen Strahlung erzeugenden Vorrichtungen (1) mit einer zentralen Steuereinheit (16) verbunden sind, die eine wählbare Frequenz vom Frequenzgenerator (15) erhält, an die Stromversorgungen (10) mit einem bestimmten Impuls-Pausen-Verhältnis und je nach Kanal mit verschiedenen Zeitfenstern weitergibt und mit denselben Zeitfenstern die Sample and Hold-Schaltungen (8') einschaltet, nachdem die Strahlung die optischen Linsen (2), die mehrarmigen Lichtleiter (3) die Atomisierungseinheit (4) und die Lichtleiter (3') und Interferenzfilter (5) durchstrahlt hat und über einen Detektor (6) und einem Meßverstärker (7) zur Sample and Hold- Schaltung (8') gelangt.

6. Vorrichtung nach Anspruch 4 und 5, **dadurch gekennzeichnet,** daß die elementspezifische Strahlung erzeugenden Vorrichtungen (1) Hohlkathodenlampen (HKLs) oder elektroden lose Glimmentladungslampen (EDLs) sind und die Atomisierungsvorrichtung eine Flamme bzw. ein elektrisch beheiztes Graphitrohr oder eine elektrisch beheizte Quarzküvette ist.

7. Vorrichtung nach Anspruch 4 bis 6, **dadurch gekennzeichnet,** daß der Interferenzfilter (5) ein feststehender Interferenzverlaufsfilter mit Lichtleitern ist oder ein rotierender, runder Interferenzverlaufsfilter oder ein feststehender, runder Interferenzverlaufsfilter mit Sektorenblende.

8. Vorrichtung nach Anspruch 4, **dadurch gekennzeichnet,** daß die Vorrichtungen jede praktikable Anzahl von elementspezifische Strahlung erzeugenden Vorrichtungen wie Hohlkathodenlampen (1) enthält und denen eine entsprechende Anzahl Frequenzgeneratoren (9) zugeordnet sind.

9. Vorrichtung nach Anspruch 5, **dadurch gekennzeichnet**, daß die Vorrichtungen jede praktikable Anzahl von elementspezifische Strahlung erzeugenden Vorrichtungen (1) wie Hohlkathodenlampen enthält und jede Hohlkathodenlampe mit ein und derselben wählbaren Frequenz einer zentralen Steuereinheit (9) versorgt ist.

FIGUR 1

FIGUR 2

FIGUR 3

Intensitaet

A1

A2

Kanal A

B1

B2

Kanal B

C1

C2

Kanal C

D1

D2

Kanal D

Zeit

t

EP 0 420 145 A2